# EUROPÄISCHE PATENTANMELDUNG

(11) **EP 3 605 809 A1**
(43) Veröffentlichungstag der Anmeldung: **05.02.2020**
(21) Anmeldenummer: 18187321.7
(22) Anmeldetag: 03.08.2018
(51) Int. Cl.: H02K 21/26, H02K 7/18, H02K 7/116

(54) **ELEKTRISCHER RADNABENANTRIEB MIT VERBESSERTER WÄRMEABFUHR**

(71) Anmelder: Lakeview Innovation Ltd., 6374 Buochs (CH)
(72) Erfinder: Kreher, Johannes, 6078 Lungern (CH); Trachsel, Mathis, 6006 Luzern (CH)
(74) Vertreter: Grünecker Patent- und Rechtsanwälte PartG mbB

(57) **Zusammenfassung**

Die vorliegende Erfindung betrifft einen elektrischen Radnabenantrieb für ein Fahrzeug, mit einer Achse, einem drehbar um die Achse gelagerten Nabengehäuse und einem als permanent erregte Synchronmaschine ausgeführten Elektromotor zum Antrieb des Nabengehäuses, wobei der Elektromotor ein Wicklungssystem bestehend aus Wicklungen umfasst sowie ein mit Eisenblechrückschluss und ein Magnetsystem mit zumindest einem Permanentmagneten aufweist. Erfindungsgemäß ist vorgesehen, dass zwischen Wicklungen, Eisenrückschluss und Nabengehäuse ein direkter thermischer Kontakt besteht und die Wicklungen mit Eisenblechrückschluss gegenüber der Achse drehbar gelagert sind.

## Beschreibung

Die vorliegende Erfindung betrifft einen elektrischen Radnabenantrieb nach dem Oberbegriff des unabhängigen Anspruchs 1.

Ein Radnabenantrieb für ein Fahrzeug besteht aus einer rahmenfesten Achse und einen drehbar um die Achse gelagerten Nabengehäuse, an welchem über mehrere Speichen die angetriebene Felge mit Reifen des Fahrzeugs befestigt ist. Zwischen Achse und Nabengehäuse befindet sich ein Elektromotor, welcher das gewünschte Drehmoment erzeugt. Zusätzlich kann ein Getriebe vorgesehen sein, um den Elektromotor in einem besseren Arbeitspunkt zu betreiben. Aus Geräusch- und Kostengründen wird jedoch häufig auf ein Getriebe verzichtet.

Aus dem Stand der Technik sind Radnabenantriebe mit unterschiedlichen Elektromotoren bekannt. Häufig kommen permanent erregte Synchronmaschinen bzw. elektronisch kommutierte Elektromotoren zum Einsatz. Bei derartigen Elektromotoren weist der Stator eine Statorwicklung auf, wobei der Rotor nicht bewickelt sondern mit einem oder mehreren Permanentmagneten bestückt ist. Wärmeverluste entstehen daher hauptsächlich Stator-seitig. Bei den bekannten Radnabenantrieben mit permanent erregter Synchronmaschine ist der Stator drehfest mit der Achse verbunden bzw. an der Achse befestigt, wobei der Rotor gegenüber der Achse drehbar gelagert und in der Regel direkt mit dem Nabengehäuse verbunden ist. Aufgrund der kleinen Querschnittsfläche der Achse kann über die Achse nur wenig Wärme an die Umgebung abgeleitet werden. Die im Stator entstehende Abwärme muss daher überwiegend über den Luftspalt zwischen Stator und Rotor auf das Nabengehäuse übertragen und schließlich an die Umgebung abgeführt werden. Der Luftspalt stellt jedoch einen signifikanten thermischen Widerstand dar, weshalb die thermisch begrenzte Dauerleistung des Elektromotors reduziert wird. Die Leistung von Radnabenantrieben mit permanent erregter Synchronmaschine ist daher aus wärmetechnischen Gründen limitiert.

Aufgabe der vorliegenden Erfindung ist es, einen elektrischen Radnabenantrieb mit vorteilhaftem Aufbau und verbesserter Wärmeabfuhr bereitzustellen.

Die Aufgabe wird gelöst durch die Merkmale des unabhängigen Anspruchs 1. Demnach liegt bei einem Radnabenantrieb gemäß dem Oberbegriff des unabhängigen Anspruchs 1 dann eine erfindungsgemäße Lösung der Aufgabe vor, wenn zwischen Wicklungen, Eisenblechrückschluss und Nabengehäuse ein direkter thermischer Kontakt besteht und die Wicklungen mit Eisenrückschlussblech gegenüber der Achse drehbar gelagert sind. Bei der erfindungsgemäßen Lösung ist der Elektromotor innerhalb des Nabengehäuses angeordnet. Die Permanentmagnete sind vorteilhaft innen liegend angeordnet und radial von Wicklungen mit Eisenblechrückschluss umschlossen. Durch die außen liegende Anordnung der Wicklungen, welche die Hauptquelle für thermische Verluste darstellen, muss die in den Wicklungen entstehende Abwärme nicht mehr über den Luftspalt zwischen Wicklungen und Magnet nach außen abgeführt werden. Die außen liegende Anordnung der Wicklungen begünstigt somit den Wärmeabtransport. Eine Wicklung kann definiert sein durch mehrere Windungen besteht aus einem elektrischen Leiter. Ein Wicklungssystem kann aus mehreren Wicklungen bestehen. Das Wicklungssystem ist drehfest mit dem Eisenblechrückschluss und dem Nabengehäuse verbunden. Dadurch wird der thermische Widerstand minimiert, was zu einer besonders guten Wärmeabfuhr führt. Für das Nabengehäuse sollten möglichst Materialien mit einer hohen thermischen Leitfähigkeit verwendet werden. Der magnetische Eisenblechrückschluss besteht vorzugsweise aus einem Eisenblechpaket, das Nabengehäuse kann beispielsweise aus Aluminium gefertigt sein.

Vorteilhafte Ausführungsformen der vorliegenden Erfindung sind Gegenstand der Unteransprüche.

Gemäß einer besonders bevorzugten Ausführungsform der vorliegenden Erfindung ist der Elektromotor ein genuteter Motor, besonders bevorzugt weist der genutete Motor eine Einzelzahnwicklung auf. Bei einem genuteten Motor leitet der Eisenblechrückschluss den magnetischen Fluss besser als die umgebende Luft. Somit wird der magnetische Fluss durch den Eisenblechrückschluss geführt. Zähne in dem Eisenblechrückschluss welche von Windungen umwickelt sind führen den magnetischen Fluss nahe an die Permanentmagnete. Somit kann ein kleiner effektiver Luftspalt zwischen Eisenblechrückschluss und Magnet realisiert werden. Dies führt zu hohe Anziehung- und Abstoßungskräfte zwischen den Permanentmagneten und den Zähnen und damit zu einem hohen Drehmoment des Motors.

Gemäß einer weiteren bevorzugten Ausführungsform der vorliegenden Erfindung weist der Radnabenantrieb eine Steuerung auf, wobei die Wicklungen zwei oder mehr Phasen aufweisen. Die Steuerung kann mechanisch mit der Achse des Radnabenantriebs verbunden sein, wobei der Radnabenantrieb derart eingerichtet ist, dass für jede der Phasen ein elektrischer Strom von Seiten der Achse auf die drehbar gelagerte Wicklungen übertragen wird. Die Steuerung kann entweder direkt oder indirekt mit der Achse verbunden sein. Jedenfalls ist die Steuerung bei dieser Ausführungsform drehfest mit der Achse ausgeführt. Die Steuerung kann im Nabengehäuse integriert sein.

Gemäß einer besonders bevorzugten Ausführungsform kann die Steuerung mechanisch mit dem Nabengehäuse verbunden sein, wobei der Radnabenantrieb derart eingerichtet ist, dass die Steuerung mit Gleichstrom versorgt wird, wobei ein BUS oder Kommunikations-Signal bspw. zur Steuerung des Elektromotors oder zur Übermittlung der Unterstützungsstufe an die Steuerung übertragen wird. Bei dieser Ausführungsform ist die Steuerung somit direkt oder indirekt drehfest mit den Wicklungen bzw. dem Eisenblechrückschluss bzw. dem Nabengehäuse verbunden. Die Übertragung des Gleichstroms kann mittels Gleitkontakt oder auch induktiv erfolgen. Das Kommunikations-Signal wird vorzugsweise induktiv übertragen, auch kapazitive Kopplung oder Funktechnik, z.B. nach Bluetooth Standard, ist als Übertragungsmethode denkbar. Als ein weiterer Vorteil erlaubt diese Variante eine Montage der Leistungselektronik auf dem drehenden Nabengehäuse mit den Leistungstransistoren in direktem Kontakt zum Nabengehäuse, was eine gute Wärmeabfuhr der Verluste der Steuerung nach außen erlaubt.

Gemäß einer weiteren Ausführungsform der vorliegenden Erfindung weist der Radnabenantrieb zumindest zwei Gleitkontakte zur Übertragung von elektrischer Energie auf die drehbar gelagerten Wicklungen auf. Als Gleitkontakt kann weiter vorzugsweise ein Bürstenkontakt vorgesehen sein. Mindestens zwei Gleitkontakte werden zur Übertragung der mindestens zwei Pole eines elektrischen Stromkreises benötigt.

Alternativ dazu kann der Radnabenantrieb zumindest eine induktive Kopplung zur Übertragung elektrischer Energie auf die drehbar gelagerten Wicklungen aufweisen. Bei dieser Ausführungsform weist der erfindungsgemäße Radnabenantrieb somit keinerlei Verschleißteile auf, welche eine aufwändige Wartung des Radnabenantriebs bedingen würden. Außerdem ist dabei der elektrische Radnabenantrieb gut gegen Verschmutzung geschützt und es besteht weniger die Gefahr von elektrischen Kurzschlüssen oder Unterbrechungen durch Verunreinigung oder Feuchte.

Gemäß einer weiteren Ausführungsform der vorliegenden Erfindung weist der Radnabenantrieb einen Motorfreilauf auf. Neben den Stromwärmeverlusten in den Wicklungen entstehen in allen weichmagnetischen Komponenten Eisenverluste. Diese sind hauptsächlich von der Drehgeschwindigkeit abhängig und fallen auch bei Fahrt mit ausgeschaltetem Motor an, wenn kein Motorfreilauf verbaut ist. Durch einen Freilauf kann der Motor entkoppelt werden. Dies beispielsweise, wenn die Batterien leer sind und ein mitdrehen des Motors aufgrund der Eisenverluste lediglich zusätzliche Energie des Fahrers benötigen würde. Ferner kann der Motor entkoppelt werden, wenn bei einem leichten Gefälle das Fahrrad durch den Motor gebremst wird oder bspw. aus gesetzlichen oder weitern Gründen der Motor ausgeschaltet wird.

Gemäß einer weiteren Ausführungsform der vorliegenden Erfindung ist der Radnabenantrieb als Direktantrieb ausgeführt. Durch einen Direktantrieb könnte Gewicht und Kosten eines Getriebes eingespart werden. Ferner erzeugt ein Direktantrieb weniger Geräusche.

Gemäß einer weiteren Ausführungsform der vorliegenden Erfindung weist der Radnabenantrieb ein Getriebe auf. Durch ein Getriebe kann bspw. der Motor mit einer höheren Drehzahl betrieben werden, wodurch sich ein optimaler Arbeitsbereich bzw. ein höheres Drehmoment ergeben kann.

Gemäß einer weiteren Ausführungsform der vorliegenden Erfindung weist der Radnabenantrieb ein ein- oder mehr stufiges Planentengetriebe auf, dessen Sonnenrad der ersten Stufe drehfest mit dem Magnetsystemverbunden ist und dessen Hohlrad der letzten Stufe drehfest oder über einen Freilauf mit dem Nabengehäuse verbunden ist und das Nabengehäuse antreibt. Ein Planetengetriebe weist eine kompakte Bauform auf und kann gut in den Radnabenantrieb integriert werden.

Dabei kann ein Planetenträger fest mit der Achse verbunden sein. Durch einen Freilauf kann das Getriebe abhängig von der Geschwindigkeit des Fahrrades oder der Drehzahl des Motors zu- oder ausgeschalten werden.

Gemäß einer weiteren Ausführungsform der vorliegenden Erfindung handelt es sich bei dem Fahrzeug um ein Zweirad, besonders bevorzugt um ein Fahrrad mit Unterstützungsmotor. Solche Fahrräder werden auch Pedelec oder E-Bike genannt.

Für die Anordnung der Permanentmagneten des Magnetsystems sind alle gängigen Konzepte wie zum Beispiel Oberflächenmagnete, vergrabene Magnete, Halbach-Anordnungen oder Flusssammler möglich.

Ausführungsbeispiele der vorliegenden Erfindung werden im Folgenden anhand von Zeichnungen näher erläutert.

Es zeigen:
- Figur 1:: einen Längsschnitt durch einen erfindungsgemäßen Radnabenantrieb gemäß einem ersten Ausführungsbeispiel,
- Figur 2:: einen ausschnittsweisen Querschnitt durch den Elektromotor des erfindungsgemäßen Radnabenantriebs aus Figur 1,
- Figur 3:: einen Längsschnitt durch einen erfindungsgemäßen Radnabenantrieb gemäß einem zweiten Ausführungsbeispiel,
- Figur 4:: einen Längsschnitt durch einen erfindungsgemäßen Radnabenantrieb gemäß einem weiteren Ausführungsbeispiel,
- Figur 5:: einen Längsschnitt durch einen erfindungsgemäßen Radnabenantrieb gemäß einem weiteren Ausführungsbeispiel mit einem Getriebe, und
- Figur 6:: einen Längsschnitt durch einen erfindungsgemäßen Radnabenantrieb gemäß einem weiteren Ausführungsbeispiel mit einem Getriebe sowie einem Motorfreilauf und einer Kupplung.

Für die folgenden Ausführungen gilt, dass gleiche Teile durch gleiche Bezugszeichen bezeichnet sind. Sofern in einer Figur Bezugszeichen enthalten sind, auf die in der zugehörigen Figurenbeschreibung nicht näher eingegangen wird, so wird auf vorangehende oder nachfolgende Figurenbeschreibungen Bezug genommen.

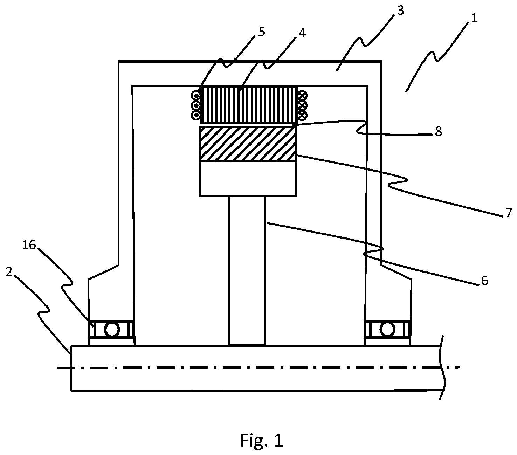

Figur 1 zeigt einen Längsschnitt durch einen erfindungsgemäßen Radnabenantrieb 1 gemäß einem ersten Ausführungsbeispiel. Der Radnabenantrieb 1 weist eine feststehende Achse 2 auf, die bspw. an einem nicht weiter dargestellten Fahrradrahmen festgelegt werden kann. Der Radnabenantrieb 1 weist ferner ein drehbar um die Achse 2 gelagertes Nabengehäuse 3 sowie einen als permanent erregte Synchronmaschine ausgeführten Elektromotor zum Antrieb des Nabengehäuses 3 auf. Die drehbare Lagerung des Nabengehäuses 3 gegenüber der Achse 2 erfolgt über zumindest zwei Lager, wovon in der Zeichnung lediglich das linke Lager mit dem Bezugszeichen 16 versehen ist.

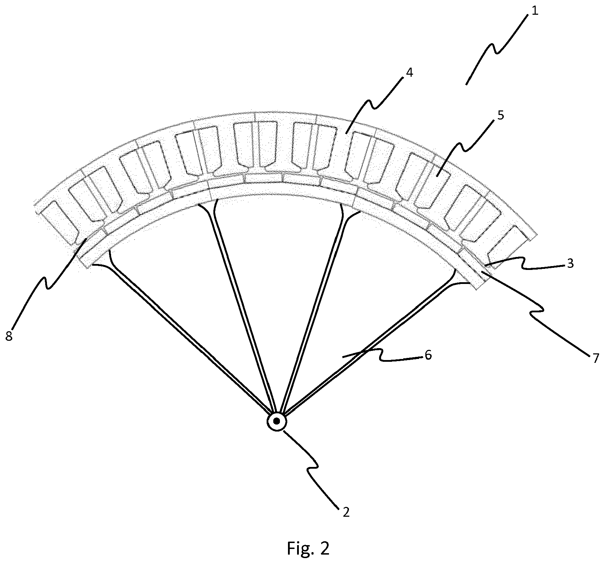

Der Elektromotor weist außenliegende Wicklungen 5 und ein radial von den Wicklungen 5 umschlossenes Magnetsystem 6 auf. In einem elektronisch kommutierten Elektromotor sind die Wicklungen gewöhnlich drehfest angeordnet und werden deshalb als Stator bezeichnet. In einem derartigen elektronisch kommutierten Motor bewegt sich das Magnetsystem bzw. die Permanentmagnete gegenüber dem drehfesten Stator und werden deshalb gewöhnlich als Rotor bezeichnet. In den vorliegenden Ausführungsbeispielen besteht zwischen den Wicklungen 5 und dem Nabengehäuse 3 ein direkter thermischer Kontakt und die Wicklungen 5 (Stator) sind gegenüber der Achse 2 drehbar gelagert, während das Magnetsystem 6 mit den Permanentmagneten 7 (Rotor) teilweise drehfest mit der Achse 2 verbunden sind. Wie Figur 2 zeigt, kann der Eisenblechrückschluss 4 mehrere gleichmäßig über den Umfang verteilt angeordnete Zähne 17 aufweisen, die jeweils mit einer Spule 5 bewickelt sind. Die Spulen 5 sind beim gezeigten Ausführungsbeispiel zu einer dreiphasigen Wicklung 5 verschaltet. In Figur 2 ist auch zu erkennen, dass am Außenumfang des Magnetsystems 6 mehrere über den Umfang verteilt angeordnete Permanentmagnete 7 angeordnet sind. Zwischen Wicklungen 5 und Magnetsystem 6 besteht der in beiden Figuren 1 und 2 gezeigte Luftspalt 8.

Erfindungsgemäß ist das Magnetsystem 6 drehfest mit der Achse 2 verbunden. Die Wicklung 5 hingegen ist gegenüber der Achse 2 drehbar gelagert und direkt mit dem Nabengehäuse 3 verbunden. Der Außenumfang des Eisenrückschlusses 4 liegt vollflächig an der Innenseite des Nabengehäuses 3 an, sodass eine optimale Übertragung der in den Wicklungen 5 entstehenden Abwärme über das Nabengehäuse 3 an die Umgebung gewährleistet ist.

Bei dem Ausführungsbeispiel gemäß den Figuren 1 und 2 ist eine Steuerung in Form einer Nabengehäuse-seitigen Steuerung 9 vorgesehen. Die Steuerung 9 kann auf einer Steuerplatine angeordnet sein. Die Steuerplatine wird über eine Stromübertragungseinheit 10 mit Gleichstrom versorgt. Die Stromübertragungseinheit 10 kann beispielsweise als Gleitkontakt zwischen der feststehenden Achse 2 und der drehbar gelagerten Baugruppe ausgeführt sein. Insbesondere eignet sich ein herkömmlicher Bürstenkontakt zur Übertragung des Gleichstroms. Alternativ ist es auch denkbar, den Gleichstrom mittels induktiver Kopplung zu übertragen. Um den Elektromotor regeln zu können, muss bspw. zur Steuerung der elektronischen Kommutierung des Elektromotors oder zur Übermittlung der Unterstützungsstufe zusätzlich ein BUS- oder Kommunikations-Signal an die Steuerung 9 übertragen werden. Die Übertragung des BUS-Signals kann mittels Funktechnik und vorzugsweise über eine Bluetooth-Verbindung erfolgen.

Die drei Phasen der Wicklungen werden von der Steuerung 9 über die lediglich schematisch dargestellten Phasenanschlüsse 11, 12 und 13 bestromt.

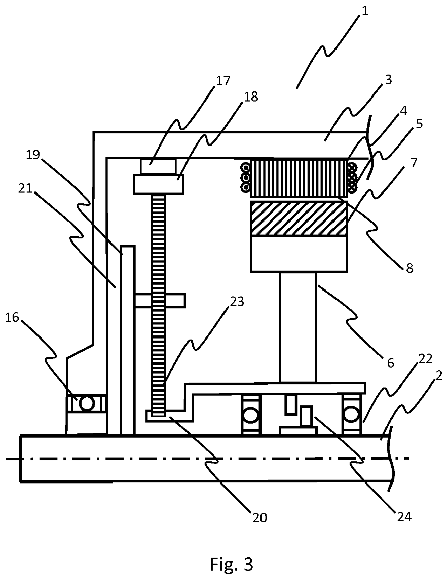

Figur 3 zeigt einen Längsschnitt durch einen erfindungsgemäßen Radnabenantrieb gemäß einem zweiten Ausführungsbeispiel. Der prinzipielle Aufbau entspricht dem Aufbau gemäß dem Ausführungsbeispiel aus den Figuren 1 und 2. Der Unterschied besteht darin, dass die Steuerung 9 bei dem Ausführungsbeispiel gemäß Figur 3 mit der feststehenden Baugruppe verbunden ist. Bei dem gezeigten Ausführungsbeispiel ist die Steuerplatine 9 achsfest angebracht. Für jede der drei Phasen der Wicklungen 5 muss ein Strom auf die drehbar gelagerte Baugruppe übertragen werden. Hierzu sind insgesamt drei Stromübertragungseinheiten 10 zwischen der feststehenden Achse 2 und dem rotierenden Nabengehäuse 3 vorgesehen. Auch hier kann die Übertragung mittels Gleitkontakt oder induktiver Kopplung erfolgen.

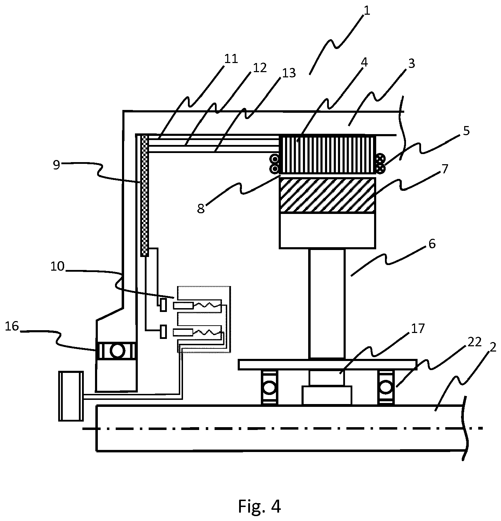

Figur 4 zeigt einen Längsschnitt durch einen erfindungsgemäßen Radnabenantrieb 1 gemäß einem weiteren Ausführungsbeispiel. Die Steuerung 9 kann in diesem Ausführungsbeispiel am Nabengehäuse 3 und damit am rotierenden Teil des Rades angeordnet sein. Die Stromkommutierung für den Elektromotor kann in der Steuerung 9 erfolgen. Damit kann der Strom über lediglich zwei Stromübertragungseinheiten 10 vom drehfesten auf den rotierenden Teil übertragen werden.

Das Ausführungsbeispiel in der Figur 4 zeigt einen Direktantrieb. Bei einem Direktantrieb kann ein Motorfreilauf 17 zwischen Magnetsystem 6 und Achse 2 verbaut sein. Der Motorfreilauf 17 kann den Motor von der drehfesten Achse 2 entkoppeln. Durch den Motorfreilauf 17 kann Bei aktivem Motor das Rückwärtsdrehen des Magnetsystems 6 verhindert werden. Das Magnetsystem 6 ist in einem ersten Zustand drehfest mit der Achse 2 verbunden. In diesem ersten Zustand kann der Motor durch Zufuhr von elektrischer Energie das Fahrzeug antreiben. Bei ausgeschaltetem Motor kann der Motorfreilauf 17 aktiv sein, sodass das Magnetsystem 6 mit den Wicklungen 5 mitrotiert. In diesem zweiten Zustand rotiert das Magnetsystem 6 mit dem Nabengehäuse 3 mit, somit ist die Relativgeschwindigkeit zwischen den Wicklungen 5 und dem Magnetsystem 6 gleich Null und es fallen keine Eisenverluste an. Dadurch wird das Fahrzeug weniger abgebremst, da bspw. keine Eisenverluste des Motors überwunden werden müssen, wodurch sich unter anderem der Fahrkomfort erhöht.

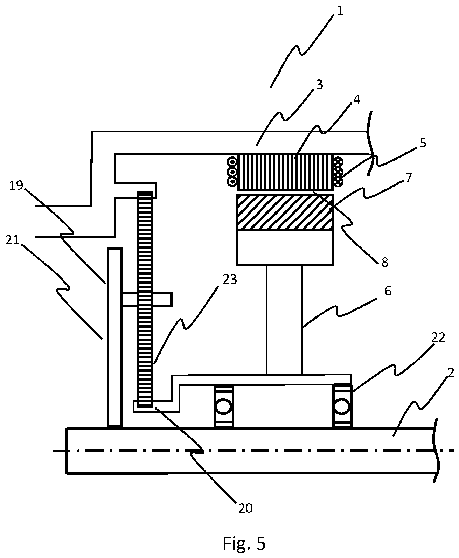

Figur 5 zeigt einen Längsschnitt durch einen erfindungsgemäßen Radnabenantrieb gemäß einem weiteren Ausführungsbeispiel mit einem Getriebe 21. Das Getriebe 21 kann ein ein- oder mehrstufiges Planetengetriebe sein. Dabei kann das Sonnenrad 20 drehfest mit dem Magnetsystem 6 und damit den Permanentmagneten 7 verbunden sein. Das Magnetsystem 6 ist durch Magnetsystemlager 22 gegenüber der Achse 2 drehbar gelagert. In dem Ausführungsbeispiel sind zwei Magnetsystemlager 22 gezeigt. Das Sonnenrad 20 steht mit dem Planetenrad 23 in Eingriff. Auf der gegenüberliegenden Seite des Sonnenrads 20 steht am Planetenrad 23 ein Hohlrad 18 in Eingriff. Das Hohlrad 18 kann drehfest mit dem Nabengehäuse 3 verbunden sein. Durch das Getriebe 21 kann der Elektromotor mit einer höheren Drehzahl betrieben werden, während das Fahrzeug mit Fahrrad üblicher Geschwindigkeit bewegt wird. Ferner kann durch das Getriebe 21 ein höheres Drehmoment an dem Rad des Fahrzeuges erzeugt werden, wodurch bspw. steilere Anstiege überwunden werden können.

Bei dem gezeigten Ausführungsbeispiel mit einem einstufigen Planetengetriebe könnte zusätzlich ein nicht dargestellter Freilauf zwischen Planetenträger 19 und Achse 2 platziert werden. Dadurch dreht bei aktivem Freilauf das gesamte Getriebe 21 und das Magnetsystem 6 mit den Wicklungen 5 und dem Nabengehäuse 3 mit, sodass keine Eisenverluste im Eisenblechrückschluss 4 oder Reibungsverluste im Getriebe 21 entstehen.

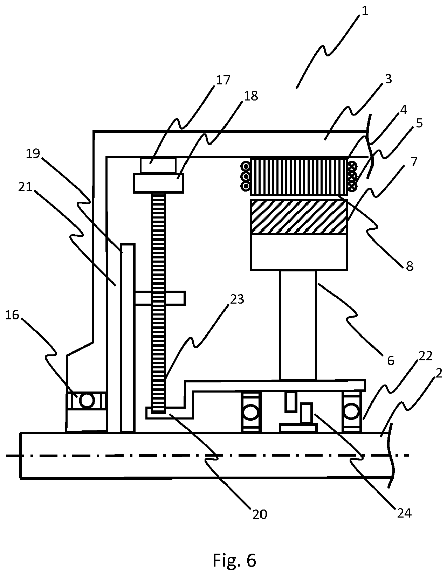

Figur 6 zeigt einen Längsschnitt durch einen erfindungsgemäßen Radnabenantrieb gemäß einem weiteren Ausführungsbeispiel mit einem Getriebe 21 sowie einem Motorfreilauf 17 und einer Kupplung 24. Durch die Kombination des Getriebes 21 mit einem oder mehreren Freiläufen und/oder einer oder mehreren Kupplungen ist es möglich ein Schaltgetriebe zu realisieren. Die Freiläufe stellen dabei eine spezielle Kupplungsform dar, wobei in eine Drehrichtung eine Kraftübertragung stattfindet, während in die andere Drehrichtung keine Kraftübertragung stattfindet. Bei einer Kupplung kann die Kraftübertragung von anderen Faktoren als der Drehrichtung abhängig gemacht werden. So kann beispielsweise eine Steuerung ein Signal an die Kupplung geben, wobei bspw. bei aktivem Signal eine Kraftübertragung stattfindet und bei inaktivem Signal keine Kraftübertragung über die Kupplung stattfindet oder umgekehrt. Das in der Figur gezeigte Ausführungsbeispiel zeigt ein einstufiges Planetengetriebe wobei zwischen Hohlrad 18 und Nabengehäuse 3 ein Motorfreilauf 17 angeordnet ist. Zwischen Magnetsystem 6 und Achse 2 ist eine Kupplung 24 angeordnet. Durch diese Anordnung ergeben sich drei sinnvolle Betriebszustände.

In einem ersten Betriebszustand ist der Motor aktiv und die Kupplung 24 ist offen (es findet keine Kraftübertragung statt). Das Getriebe 21 ist aktiv und der elektrische Radnabenantrieb 1 liefert ein hohes Drehmoment auf das Rad des Fahrzeuges.

In einem zweiten Betriebszustand ist der Motor aktiv und die Kupplung 24 ist geschlossen. In diesem Betriebszustand verhält sich der Antrieb wie ein Direktantrieb ohne Getriebe. Das Getriebe 21 ist über den Freilauf ausgeschaltet und das Getriebe 21 erzeugt daher weder Reibungsverluste noch Geräusche. Es wird dabei ein kleineres Drehmoment am Rad des Fahrzeuges erzeugt, dafür ist eine höhere Umdrehungsgeschwindigkeit des Rades und damit eine höhere Geschwindigkeit für das Fahrzeug möglich.

In einem dritten Betriebszustand ist der Motor deaktiviert und die Kupplung offen. Das Magnetsystem 6 rotiert mit dem Eisenblechrückschluss 4 mit, es entstehen keine Eisenverluste. Das Getriebe 21 dreht langsam rückwärts und erzeugt geringe Reibungsverluste, diese können durch einen weiteren Freilauf zwischen Sonnenrad 20 und Magnetsystem 6 verhindert werden. In dem Fall, dass die Eisenverluste geringer sind als die Reibungsverluste im Getriebe 21, bleibt das Magnetsystem stehen und es entstehen Eisenverluste aber keine Reibungsverluste. In jedem Fall stellt sich der Zustand mit den geringsten Verlusten ein, auch Zwischenzustände sind möglich.

Es ist bei einigen Ausführungsbeispielen auch möglich den Elektromotor als Generator zu betreiben und Energie zu rekuperieren. Dadurch kann beispielsweise bei einer Talfahrt oder beim Bremsen mechanische Energie in elektrische Energie umgewandelt werden. Die elektrische Energie kann bspw. in der Batterie bzw. dem Akku gespeichert werden.

### Bezugszeichenliste

- 1: elektrischer Radnabenantrieb
- 2: Achse
- 3: Nabengehäuse
- 4: Eisenrückschluss
- 5: Wicklung
- 6: Magnetsystem
- 7: Permanentmagnet
- 8: Luftspalt
- 9: Steuerung
- 10: Stromübertragungseinheit
- 11: Phasenanschlüsse
- 12: Phasenanschlüsse
- 13: Phasenanschlüsse
- 16: Lager
- 17: Motorfreilauf
- 18: Hohlrad
- 19: Planetenträger
- 20: Sonnenrad
- 21: Getriebe
- 22: Magnetsystemlager
- 23: Planetenrad
- 24: Kupplung

## Patentansprüche

1. Elektrischer Radnabenantrieb (1) für ein Fahrzeug, mit einer Achse (2), einem drehbar um die Achse (2) gelagerten Nabengehäuse (3) und einem als permanent erregte Synchronmaschine ausgeführten Elektromotor zum Antrieb des Nabengehäuses (3), wobei der Elektromotor ein Wicklungssystem bestehend aus Wicklungen (5) umfasst sowie ein Eisenblechrückschluss (4) und ein Magnetsystem (6) mit zumindest einem Permanentmagneten (7) aufweist, **dadurch gekennzeichnet, dass** zwischen Wicklungen (5), Eisenblechrückschluss (4) und Nabengehäuse (3) ein direkter thermischer Kontakt besteht und die Wicklungen (5) mit Eisenblechrückschluss (4) gegenüber der Achse (2) drehbar gelagert sind.

2. Elektrischer Radnabenantrieb (1) nach Anspruch 1, **dadurch gekennzeichnet, dass** der Elektromotor ein genuteter Motor ist, besonders bevorzugt weist der genutete Motor eine Einzelzahnwicklung auf.

3. Elektrischer Radnabenantrieb (1) nach einem der Ansprüche 1 bis 2, **dadurch gekennzeichnet, dass** der Radnabenantrieb (1) eine Steuerung (9) aufweist, wobei die Wicklungen (5) zwei oder mehr Phasen aufweisen.

4. Elektrischer Radnabenantrieb (1) nach Anspruch 3, **dadurch gekennzeichnet, dass** die Steuerung (9) mechanisch mit der Achse (2) des Radnabenantriebs (1) verbunden ist, wobei der Radnabenantrieb (1) derart eingerichtet ist, dass für jede der Phasen ein elektrischer Strom auf die drehbar gelagerte Wicklungen (5) übertragen wird.

5. Elektrischer Radnabenantrieb (1) nach Anspruch 3, **dadurch gekennzeichnet, dass** die Steuerung (9) mechanisch mit dem Nabengehäuse (3) verbunden ist, wobei der Radnabenantrieb (1) derart eingerichtet ist, dass die Steuerung (9) mit Gleichstrom versorgt wird, wobei ein Kommunikations-Signal zur Steuerung des Elektromotors an die Steuerung (9) übertragen wird.

6. Elektrischer Radnabenantrieb (1) nach einem der Ansprüche 1 bis 5, **dadurch gekennzeichnet, dass** der Radnabenantrieb (1) zumindest zwei Gleitkontakte zur Übertragung von elektrischer Energie auf die drehbar gelagerte Wicklungen (5) aufweist.

7. Elektrischer Radnabenantrieb (1) nach einem der Ansprüche 1 bis 6, **dadurch gekennzeichnet, dass** der Radnabenantrieb (1) zumindest eine induktive Kopplung zur Übertragung elektrischer Energie auf die drehbar gelagerte Wicklungen (5) aufweist.

8. Elektrischer Radnabenantrieb (1) nach einem der Ansprüche 1 bis 7, **dadurch gekennzeichnet, dass** der Radnabenantrieb (1) einen Motorfreilauf (17) aufweist.

9. Elektrischer Radnabenantrieb (1) nach einem der Ansprüche 1 bis 8, **dadurch gekennzeichnet, dass** der Radnabenantrieb (1) als Direktantrieb ausgeführt ist.

10. Elektrischer Radnabenantrieb (1) nach einem der Ansprüche 1 bis 8, **dadurch gekennzeichnet, dass** der Radnabenantrieb (1) ein Getriebe (21) aufweist.

11. Elektrischer Radnabenantrieb (1) nach Anspruch 10, **dadurch gekennzeichnet, dass** der Radnabenantrieb (1) ein ein- oder mehr stufiges Planentengetriebe aufweist, dessen Sonnenrad (20) der ersten Stufe drehfest mit dem Magnetsystem (6) verbunden ist und dessen Hohlrad (18) der letzten Stufe drehfest oder über einen Motorfreilauf (17) mit dem Nabengehäuse (3) verbunden ist und das Nabengehäuse (3) antreibt.

12. Elektrischer Radnabenantrieb (1) nach einem der Ansprüche 10 oder 11, **dadurch gekennzeichnet, dass** ein Planetenträger (19) fest mit der Achse (2) verbunden ist.

13. Elektrischer Radnabenantrieb (1) nach einem der Ansprüche 1 bis 12, **dadurch gekennzeichnet, dass** das es sich bei dem Fahrzeug um ein Zweirad, besonders bevorzugt um ein Fahrrad handelte.
